(19) Europäisches Patentamt
European Patent Office
Office européen des brevets

(11) Veröffentlichungsnummer: **0 383 164 B1**

(12) **EUROPÄISCHE PATENTSCHRIFT**

(45) Veröffentlichungstag der Patentschrift: **21.06.95**

(51) Int. Cl.6: **C04B 35/58**, C04B 41/87

(21) Anmeldenummer: **90102344.0**

(22) Anmeldetag: **07.02.90**

(54) **Hochfeste Verbundkeramik, Verfahren zu ihrer Herstellung sowie ihre Verwendung.**

(30) Priorität: **11.02.89 DE 3904118**

(43) Veröffentlichungstag der Anmeldung:
**22.08.90 Patentblatt 90/34**

(45) Bekanntmachung des Hinweises auf die Patenterteilung:
**21.06.95 Patentblatt 95/25**

(84) Benannte Vertragsstaaten:
**CH DE FR GB IT LI**

(56) Entgegenhaltungen:
**EP-A- 0 235 486**
**EP-A- 0 266 918**
**WO-A-80/00021**
**DE-A- 3 809 180**

(73) Patentinhaber: **HOECHST AKTIENGESELLSCHAFT**

**D-65926 Frankfurt (DE)**

(72) Erfinder: **Peukert, Marcellus, Dr.**
**Platanenweg 8**
**D-6238 Hofheim am Taunus (DE)**
Erfinder: **Brück, Martin, Dr.**
**Haneckstrasse 17**
**D-6238 Hofheim am Taunus (DE)**
Erfinder: **Vaahs, Tilo, Dr.**
**Am Flachsland 54**
**D-6233 Kelkheim (Taunus) (DE)**
Erfinder: **Kleiner, Hans-Jerg, Dr.**
**Altkönigstrasse 11a**
**D-6242 Kronberg/Taunus (DE)**
Erfinder: **Aldinger, Fritz, Dr.**
**Barbarossastrasse 44**
**D-6458 Rodenbach (DE)**

EP 0 383 164 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine hochfeste Verbundkeramik, insbesondere auf Basis von Siliziumnitrid, ein Verfahren zu ihrer Herstellung sowie ihre Verwendung.

Hochfeste Verbundkeramiken werden wegen ihrer hohen Festigkeit, Korrosions- und Temperaturbeständigkeit in zunehmenden Mengen im Maschinenbau verwendet.

Siliziumnitrid-Keramik kann durch Reaktionssintern von Formkörpern aus Siliziumpulver in Stickstoffatmosphäre erhalten werden. Die so hergestellte "reaktionsgebundene Siliziumnitrid-Keramik" (RBSN) besteht aus kristallinem $\alpha$- und $\beta$-$Si_3N_4$ und hat eine Restporosität von 20 - 30 Vol.-%. Die Biegefestigkeit der RBSN-Keramik ist jedoch begrenzt; im allgemeinen liegen die Werte bei 150 bis 300 MPa.

Die Biegefestigkeit von RBSN-Keramik kann durch Infiltration mit in Lösungsmitteln gelösten Polysilazanen und deren anschließende thermische Zersetzung verbessert werden, siehe JP-A-62-230 673 oder EP-A-235 486. Nachteilig bei diesem Verfahren ist der Einsatz von Lösungsmitteln. Die Lösungsmittel füllen einen gewissen Raumanteil, der daher nicht von den Polysilazanen ausgefüllt werden kann und deshalb als freies Porenvolumen nach der Zersetzung der Polysilazane verbleibt. Es bat sich weiter gezeigt, daß durch die Benutzung von Lösungsmitteln ein Verschluß der Poren an der Oberfläche erfolgt. Daher können die noch freien Poren im Innern der Matrix auch durch Wiederholung der Infiltration nicht ausreichend mit Polysilazanen gefüllt werden.

Aus WO-A-8000021 ist die Infiltration mit einem Polysilan oder einem Oligosilazan bekannt.

DE-A-3 809 180 beschreibt die Herstellung einer $Si_3N_4$-Endlosfaser aus Polycarbosilan oder Polysilazan.

Es bestand daher die Aufgabe, ein Verfahren zur Herstellung von hochfesten Verbundkeramiken zu finden, mit dem möglichst alle Poren einer Matrix, nicht nur die Poren an der Oberfläche, mit Polysilazanen aufgefüllt und damit die Dichte der Matrix erhöht werden kann. Es ist bekannt, daß die Biegefestigkeit bei Verbundkeramik mit steigender Dichte der Matrix zunimmt.

Ein Gegenstand der vorliegenden Erfindung ist ein Verfahren zur Herstellung einer hochfesten Verbundkeramik, das dadurch gekennzeichnet ist, daß man in einem ersten Schritt in eine offenporige Matrix ein schmelzflüssiges Polychlorsilazan infiltriert und in einem zweiten Schritt die infiltrierte Matrix unter Schutzgas auf 800 bis 2500 °C erhitzt, wobei das Polychlorsilazan dadurch erhältlich ist, daß man mindestens eines der Oligosilazane der Formel (I)

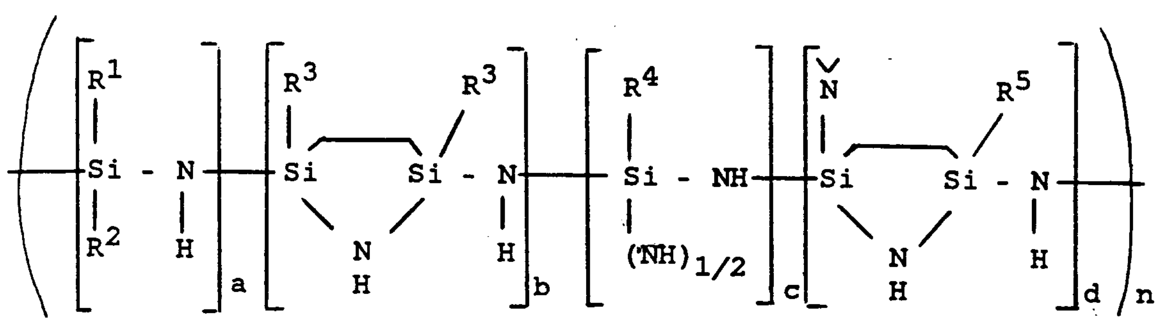

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist. Natürlich kann man auch Mischungen der so erhaltenen Polychlorsilazane für die Infiltration verwenden.

Vorzugsweise ist unabhängig voneinander $R^1$, $R^2$, $R^4$, $R^6$, $R^7$, $R^8$ = H, $C_1$-$C_3$-Alkyl oder $C_2$-$C_3$-Alkenyl und $R^3$, $R^5$, $R^9$, $R^{10}$ = $C_1$-$C_3$-Alkyl oder $C_2$-$C_3$-Alkenyl. Besonders bevorzugt ist der Fall, daß $R^1 = R^6$ = H, $R^2 = R^3 = R^5 = R^7 = R^8 = R^9 = R^{10} = CH_3$ und unabhängig voneinander $R^4$, $R^8$ = $CH_3$ oder Vinyl ist. a, b, c, d sind die Molfraktionen der jeweiligen Struktureinheiten, wobei $a + b + c + d = 1$ gilt. Besonders geeignete Polychlorsilazane werden erhalten, wenn man von Oligosilazanen der Formel (I) ausgeht, für die a = 1 oder b = 1 ist, oder von Gemischen dieser beiden Oligosilazane, oder von Oligosilazanen der Formel (I), für die $0<a<1$ und $0<b<1$ mit $a+b=1$ gilt oder für die $0<a<1$ und $0<d<0.7$ mit $a+d=1$ gilt.

Die als Ausgangsprodukte für die Polychlorsilazane eingesetzten Oligosilazane der Formel (I) können dadurch erhalten werden, daß man überschüssigen Ammoniak mit einem Ausgangsmaterial, das mindestens eine der beiden Komponenten (II) $R^1R^2SiCl_2$ und (III) $Cl_2R^3Si\text{-}CH_2CH_2\text{-}SiR^3Cl_2$ enthält, sowie außerdem eine oder beide der Komponenten (IV) $R^4SiCl_3$ und (V) $Cl_3Si\text{-}CH_2CH_2\text{-}SiR^5Cl_2$ enthalten kann, bei -70 °C bis +100 °C umsetzt, wobei unabhängig voneinander $R^1$, $R^2$, $R^4$ = H, $C_1$-$C_6$-Alkyl oder $C_2$-$C_6$-Alkenyl und $R^3$, $R^5$ = $C_1$-$C_6$-Alkyl oder $C_2$-$C_6$-Alkenyl ist und der molare prozentuale Anteil an (II) oder (III) oder deren Gemisch im Ausgangsmaterial mindestens 30 % beträgt.

Die als Ausgangsmaterialien für die Oligosilazane eingesetzten Chlorsilane (II) $R^1R^2SiCl_2$ und (IV) $R^4SiCl_3$ sind im Handel erhältlich, die ethylenverbrückten Spezies (III) und (V) sind durch Hydrosilylierung von handelsüblichem $R^3HSiCl_2$ und Ethin zugänglich, bzw. durch Hydrosilylierung von Vinyltrichlorsilan und $R^5HSiCl_2$ (siehe Versuchsbericht).

Zur Herstellung der Oligosilazane werden vorzugsweise die Chlorsilane in einem Lösungsmittel vorgelegt, welches sich inert gegenüber den Reaktanten - Chlorsilane und $NH_3$ -verhält, und mit Ammoniak bis zur Sättigung vermischt, was dann eintritt, wenn sämtliche SiCl-Funktionen durch NH-Gruppen substituiert sind.

Für diese Reaktion geeignete Lösungsmittel sind z. B. gesättigte aliphatische oder aromatische Kohlenwasserstoffe wie n-Pentan, Cyclohexan, Toluol, chlorierte Kohlenwasserstoffe wie Chloroform oder Chlorbenzol, oder Ether wie Diethylether oder THF.

Gegebenenfalls kann bei der Herstellung der Oligosilazane auch unter vermindertem Druck gearbeitet werden, aber auch bei Drücken von 1 bis 100 bar. Ammoniak kann als Gas oder als Flüssigkeit zudosiert werden. Das Verfahren kann auch kontinuierlich gestaltet werden.

Bei der Umsetzung der Oligosilazane zum Polychlorsilazan beträgt vorzugsweise das molare Verhältnis der Reaktanten Chlorsilan:Monomereneinheit des Oligosilazans (n = 1) etwa 0,1:1 bis etwa 1,5:1, insbesondere etwa 0,1:1 bis etwa 0,7:1.

Zur Umsetzung der Reaktanten miteinander werden vorzugsweise das oder die Oligosilazane vorgelegt und mindestens eins der genannten Chlorsilane zugegeben. Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Nach beendeter Umsetzung wird der Rest an leichter flüchtigen Verbindungen im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem hergestellten Polychlorsilazan abgetrennt werden.

Die Reaktionsdauer richtet sich nach der Geschwindigkeit des Aufheizens und der Reaktionstemperatur. Im allgemeinen genügt eine Reaktionszeit von 3 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol, oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die Polychlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden.

Die erhaltenen Polychlorsilazane schmelzen bereits bei etwa 50 bis 200 °C. Sie verbinden eine hohe keramische Ausbeute (bei der folgenden thermischen Zersetzung) mit niedriger Viskosität; durch Mischung verschiedener Polychlorsilazane kann man diesen Effekt optimieren.

Als Schutzgas bei der Erhitzung der mit dem Polychlorsilazan infiltrierten Matrix eignet sich beispielsweise Stickstoff, Edelgase, Gemische dieser Gase oder Gase, die zumindest hauptsächlich aus Stickstoff oder Edelgasen bestehen.

Die Temperatur bei dieser Erhitzung beträgt 800 °C bis 2500 °C, vorzugsweise 1000 °C bis 2000 °C. Dabei wird im allgemeinen unter Normaldruck oder einem Überdruck bis etwa 150 bar gearbeitet.

Weiter kann man Sinterhilfsmittel, vorzugsweise Verbindungen des Magnesiums, Aluminiums, Yttriums oder eines seltenen Erdenmetalls einzeln oder im Gemisch in dem geschmolzenen Polychlorsilazan lösen und die Matrix mit dieser Schmelze statt mit reinem Polychlorsilazan infiltrieren. Besonders geeignete Verbindungen sind hierfür die Nitrate, Alkoholate, Acetate oder Acetylacetonate einzeln oder als Gemisch. Im allgemeinen verwendet man soviel des Sinterhilfsmittels, daß etwa 0,05 bis 0,5 mol des Sinterhilfsmittelmetalls (Mg, Al, Y, seltenes Erdenmetall) pro 100 g fertige Verbundkeramik vorliegen.

Im allgemeinen genügt eine einmalige Infiltration der Matrix mit schmelzflüssigem Polychlorsilazan mit anschließender Erhitzung. In manchen Fällen kann man jedoch durch ein oder mehrmalige Wiederholung der Sequenz Infiltration-Erhitzen eine noch höhere Matrixdichte erreichen, was von Vorteil ist.

Als offenporige Matrizen sind beispielsweise Formkörper aus Oxiden, Nitriden, Oxinitriden, Carbiden, Siliziden, Silikaten, Phosphiden oder Boriden geeignet.

Besonders gute Ergebnisse werden erzielt, wenn man als offenporige Matrix einen gesinterten Formkörper aus reaktionsgebundenem Siliziumnitrid (RBSN) verwendet, vorzugsweise mit einer offenen Porosität von 15-30 %.

Die erfindungsgemäß hergestellte hochfeste Verbundkeramik - insbesondere die eben erwähnte, auf Basis einer Siliziumnitrid-Matrix (RBSN) hergestellte - kann als Bauteil oder Verschleißteil für hohe thermische, mechanische oder korrosive Beanspruchung verwendet werden. Man kann sie, wenn gewünscht, durch einen Heiß-Preßsinter-Schritt noch weiter verdichten.

Von Vorteil bei dem erfindungsgemäßen Verfahren ist es, daß während der Verarbeitung das schmelzflüssige Polychlorsilazan viskositätsstabil ist, d.h. weder durch Gelbildung altert, noch vernetzt oder Blasen bildet. Dank der geringen Viskosität der Polychlorsilazanschmelze füllt sich das Porensystem der Matrizen bei der Infiltration sehe leicht.

Die Gesamtporosität der Matrix errechnet sich durch Division der gemessenen Matrix-Dichte durch die theoretische Dichte der kompakten Matrix. Für eine reine Siliziumnitrid-Verbundkeramik (RBSN) gilt also:

$$\text{Gesamtporosität in \%} = \frac{100 \cdot \text{gemessene Dichte (g/ml)}}{3{,}185\ \text{(g/ml)}}$$

Die offene Porosität wurde mit dem Porosimeter 2000 der Firma Carlo Erba Strumentazione bestimmt. Die Bestimmungsmethode ist beschrieben in "Experimental Methods in Catalytic Research" R.B. Anderson, Academic Press, New York 1968, S. 45 ff.

Die Biegefestigkeit wurde auf der Universalprüfmaschine Instron 1326 als 4-Punkt-Biegebruchfestigkeit nach der USA Norm Mil.-STD 1942 gemessen:
4-Punkt-Auflager mit 40 mm/20 mm Stützabstand und konstanter Krafterhöhung von 500 N/s an Probekörpern mit den Maßen 3,5 mm • 4,5 mm • 45 mm.

Es hat sich gezeigt, daß besonders große Biegefestigkeiten von Verbundkeramik gemäß dem erfindungsgemäßen Verfahren dann resultieren, wenn die zu infiltrierende Matrix in einem Autoklaven zunächst im Vakuum entgast wird und dann das zunächst als Feststoff im Autoklaven vorgelegte Polychlorsilazan geschmolzen wird. Danach wird in den Autoklaven Schutzgas eingepreßt. Im allgemeinen werden hierbei Überdrücke bis 500 bar, üblicherweise 350 bis 450 bar angewandt.

Bei der Erhitzung der infiltrierten Matrix können im Prinzip Temperaturen bis zu 2500 °C angewendet werden. Bei Temperaturen ab etwa 1600 °C muß dann aber, zur Vermeidung der Zersetzung des $Si_3N_4$, unter hohem Stickstoffdruck gearbeitet werden. Deshalb ist es im allgemeinen günstiger, die infiltrierte Matrix nur auf 1100 bis 1400 °C zu erhitzen. Hierbei wird aus dem Polychlorsilazan ein Zersetzungsprodukt gebildet, das etwa folgende Zusammensetzung hat:

50 % ± 5 % Si
24 % ± 5 % N
24 % ± 5 % C
2 % ± 3 % O

Statt unter Schutzgasen wie Stickstoff oder Edelgas zu arbeiten, kann man die infiltrierte Matrix auch in Ammoniak-Atmosphäre (Ammoniak oder ammoniakhaltiges Gas) erhitzen, wobei eine Temperatur von 800 bis 1500 °C zu wählen ist. Dies ist ein weiterer Gegenstand der vorliegenden Erfindung.

Das Polychlorsilazan wird hierbei in $Si_3N_4$ mit geringem Kohlenstoffgehalt überführt. Zwischenstufen zwischen $Si_3N_4$ (60 Gew.-% Si, 40 Gew.-% N) und dem Zersetzungsprodukt der zuvor genannten Zusammensetzung werden erhalten, wenn unter einer Mischung aus Stickstoff und Ammoniak gearbeitet, die Zersetzungstemperatur bei etwa 800 bis 1500 °C und die Zersetzungsdauer kurz gewählt wird.

Ein weiterer Gegenstand der vorliegenden Erfindung ist die Herstellung einer hochfesten Siliziumnitrid-Verbundkeramik (RBSN) mit einem Kohlenstoffgehalt von unter 0,5 Gew.-%, einem Sauerstoffgehalt von unter 4 Gew.-% und einer offenen Porosität von weniger als 3 %, dadurch gekennzeichnet, daß man in einem ersten Schritt in eine Siliziumnitrid-Matrix mit einer offenen Porosität von 15 bis 30 % ein schmelzflüssiges Polychlorsilazan infiltriert und in einem zweiten Schritt die infiltrierte Matrix unter Ammoniak oder ammoniakhaltigem Gas auf 800 bis 1500 °C erhitzt,
wobei das Polychlorsilazan dadurch erhältlich ist, daß man mindestens eines der Oligosilazane der Formel (I)

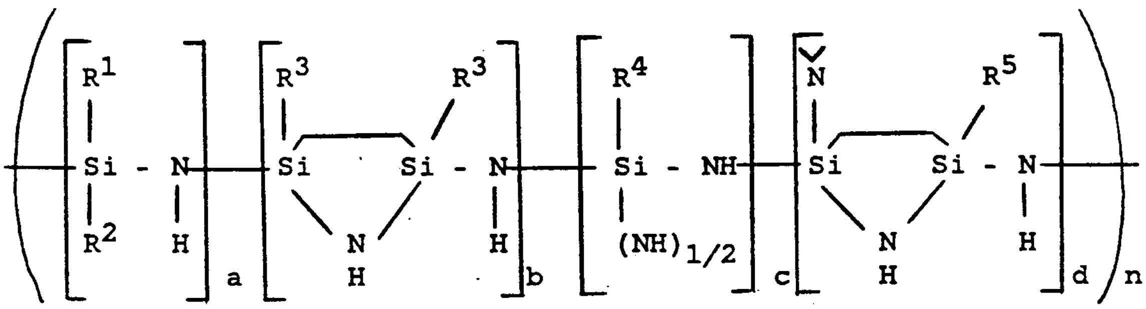

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist. Dabei können wieder Mischungen der so erhaltenen Polychlorsilazane für die Infiltration verwendet werden, und für die vorzugsweise verwendeten Polychlorsilazane gilt wieder das bereits oben gesagte.

Bei der Zersetzung des Polychlorsilazans unter Ammoniak wird eine weiße bis hellgrau gefärbte Verbundkeramik erhalten; in Stickstoff- oder Edelgasatmosphäre resultiert eine dunkel gefärbte Verbundkeramik.

Nach der Zersetzung des Polychlorsilazans sind noch etwa 60 bis 70 % des anfänglich infiltrierten Polychlorsilazan-Gewichtes in der Matrix. Da beim erfindungsgemäßen Verfahren die Matrix an der Oberfläche offenporig bleibt, kann durch wiederholte Infiltrations-Zersetzungs-Schritte die Matrix-Dichte weiter erhöht werden.

Die Kristallinität des durch Zersetzung gebildeten Siliziumnitrids ist über die Endtemperatur steuerbar:
Bei Endtemperaturen zwischen 800 und etwa 1200 °C entsteht amorphes Siliziumnitrid; oberhalb einer Temperatur von etwa 1200 °C entsteht teilamorphes Siliziumnitrid mit mikrokristallinem $\alpha$-Siliziumnitrid der mittleren Kristallitgröße von etwa 20 bis 30 nm. Die kleinen dispergierten Kristallite erhöhen die Festigkeit; ihre Größe wird bestimmt aus der Röntgenbeugungsreflex-Linienverbreiterung der 101, 201, 102 und 210-Reflexe (R.B. Anderson, Experimental Methods in Catalytic Research, New York, 1968, Seite 84).
Das $\alpha$-Siliziumnitrid wandelt sich bei langer Erhitzungsdauer und oberhalb etwa 1500 °C in $\beta$-Siliziumnitrid um.

Bei der Infiltration von Polychlorsilazan in eine Siliziumnitrid-Matrix zusammen mit Sinterhilfsmitteln können etwa 0,05 bis 0,6 mol des Sinterhilfsmittels pro 100 g fertiger Formkörper in die Matrix eingebracht werden.

Durch einen zusätzlichen Heiß-Preßsinter-Schritt an der erfindungsgemäßen $Si_3N_4$-Verbundkeramik sind Biegefestigkeiten von 500 bis 600 MPa erreichbar.

Die folgenden Beispiele erläutern die Erfindung.

**Versuchsbericht**

1. Herstellung des Oligosilazans $(CH_3SiHNH)_n$ (Formel I mit a = 1, b = c = d = 0, $R^1 = CH_3$, $R^2 = H$)

In 800 ml absolutem THF wurden 100 ml (0,97 mol) Methyldichlorsilan gelöst und für 3 Stunden Ammoniak eingeleitet (Einleitgeschwindigkeit: 0,5 l/min). Durch Kühlen mit einem Eisbad wurde die Reaktionstemperatur im Bereich von 20 bis 25 °C gehalten. Zur Vervollständigung der Reaktion wurde 1 h bei Raumtemperatur gerührt und anschließend unter Argon das Ammoniumchlorid abgetrennt. Der Niederschlag wurde 2 mal mit je 350 ml THF gewaschen und die vereinigten THF-Lösungen unter reduziertem Druck eingeengt. Man erhielt ein klares, leicht bewegliches Öl von $(CH_3SiHNH)_n$ in einer Ausbeute von 44,5 g = 78 % der Theorie.

2. Herstellung eines Polychlorsilazans aus dem Oligosilazan $(CH_3SiHNH)_n$ und Methyldichlorsilan

108,8 g (1,84 mol) $(CH_3SiHNH)_n$ wurden bei 30 bis 45 °C mit 176,1 g (1,53 mol) $CH_3SiHCl_2$ versetzt und im Ölbad innerhalb von 7 h auf 200 °C erhitzt. Dabei stieg die Innentemperatur von 46 °C auf 164 °C an. Oberhalb von 100 °C setzte eine kräftige Gasentwicklung ein. Nach beendeter Reaktion und Abkühlung erhielt man ein sprödes Harz. Der Gesamtinhalt des Reaktionskolbens betrug 134 g. Das Harz wurde mit 500 ml THF extrahiert, der Rückstand anschließend mit 50 ml n-Hexan gewaschen und die organischen Lösungsmittel im Vakuum abgezogen. Zurück blieben 109 g eines weißen Pulvers der chemischen Zusammensetzung $C_1H_{3,62}Cl_{0,38}N_{0,8}Si_1$

| Elementaranalyse (Gew.-%): | | | | | |
|---|---|---|---|---|---|
| Gefunden: | 19,1 % Cl; | 39,8 % Si; | 16,2 % N; | 16,5 % C; | 6,8 % H |
| Berechnet: | 19,7 % Cl; | 41,0 % Si; | 16,4 % N; | 17,6 % C; | 5,3 % H |
| Molmasse: 1865 g/mol, osmometrisch in Benzol | | | | | |

3. Herstellung des 1,2-Bis(methyldichlorsilyl)ethans der Formel

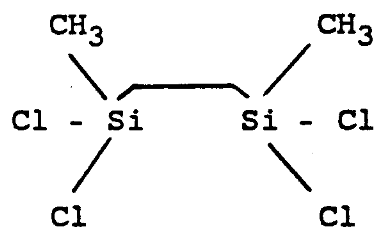 .

Mit Hilfe einer Hydrosilylierung wurden zwei Moleküle Methyldichlorsilan $(CH_3)HSiCl_2$ an ein Molekül Ethin HCCH addiert. Dazu leitete man gasförmiges Ethin in vorgelegtes Toluol als Lösungsmittel ein. Zu dieser Lösung gab man 0,5 ml einer 0,05 molaren Lösung von Hexachlorplatinsäure in Chloroform. Man erhitzte auf 100 °C und tropfte langsam Methyldichlorsilan zu (Sdp. 45 °C). Dabei wurde ständig Ethin eingeleitet. Der Verlauf der Reaktion wurde über die Temperatur des Reaktionsgemisches verfolgt. Sank sie unter 80 °C, so lag zuviel nicht reagiertes Methyldichlorsilan vor, welches man dann vor weiterem Zutropfen zuerst abreagieren ließ. Die Ausbeute an 1,2-Bis(methyldichlorsilyl)ethan war nahezu 100 %, und die Lösung konnte ohne Aufarbeitung für die Herstellung des Oligosilazanes verwendet werden. Der Gehalt an Chlorsilan ließ sich leicht mit Hilfe des $^1$H-NMR-Spektrums feststellen. Bevorzugt sind möglichst geringe Anteile an Lösungsmittel. Völlig lösungsmittelfrei ließ sich die Verbindung herstellen, wenn von vornherein 1,2-Bis(methyldichlorsilyl)ethan vorgelegt wurde, um die notwendige Reaktionstemperatur zu erreichen.

4. Herstellung des 1-Methyldichlorsilyl-2-trichlorsilylethans der Formel

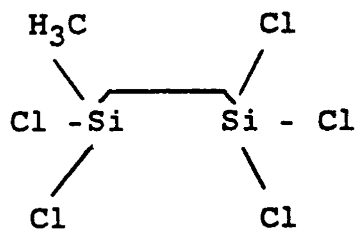 .

300 ml (381 g; 2,36 mol) Vinyltrichlorsilan wurden vorgelegt und mit 0,5 ml einer 0,05 molaren $H_2PtCl_6$-Lösung in $CHCl_3$ versetzt. Dazu wurden bei 90 °C 242 ml (271,5 g, 2,36 mol) Methyldichlorsilan langsam

zugetropft. Dabei stieg die Temperatur innerhalb des Reaktionsgefäßes auf 120 °C an, ohne daß die Ölbadtemperatur erhöht worden war. Ausbeute: 650 g (99 %) ohne Aufarbeitung, da Produkt in reiner Form vorlag.

**Beispiel**

Formkörper:

Es wurden Formkörper aus reaktionsgebundenem Siliziumnitrid (RBSN) mit den folgenden Daten eingesetzt:

| | |
|---|---|
| Gesamtporosität | 23,8 % |
| offene Porosität | 18,0 % |
| Dichte $\rho$ | 2,43 $g/cm^3$ |
| 4-Punkt-Biegebruchfestigkeit (Bbf.) (40/20) | 188 MPa |
| Abmessungen | 3,5 mm • 4,5 mm • 45 mm |

**I. Pyrolyse in Stickstoff**

A. Erste Infiltration und anschließende Pyrolyse

Es wurden jeweils einige Formkörper zusammen mit ca. 50 g eines der in Tabelle 1 definierten Polychlorsilazane 1 bis 12 in einem Autoklaven bis auf 0,01 mbar evakuiert, anschließend auf 180 °C erwärmt und mit Stickstoff unter einen Druck von 400 bar gesetzt. Nach 10 h wurde auf Raumtemperatur abgekühlt und der Autoklav entspannt.

Die Formkörper wurden durch Schleifen von anhaftendem Polysilazan befreit und dann 10 h lang bei 200 °C strömendem Ammoniak ausgesetzt.

Anschließend erfolgte in strömendem Stickstoff die Zersetzung des Polychlorsilazans, indem man innerhalb 10 h auf 1400 °C erhitzte und diese Temperatur 3 h hielt. Schließlich ließ man auf 20 °C abkühlen. Die Formkörper waren intensiv schwarz gefärbt. Anschließend wurde die Gesamtporosität, die offene Porosität, die Dichte und die 4-Punkt-Biegebruchfestigkeit (40/20) der Verbundkeramikkörper bestimmt. Die Meßwerte finden sich in Tabelle 2.

B. Zweite Infiltration und anschließende Pyrolyse

Die Verbundkeramikkörper wurden anschließend an die Messungen erneut zusammen mit dem gleichen Polychlorsilazan wie bei der ersten Infiltration im Autoklaven bis auf 0,01 mbar evakuiert, anschließend auf 180 °C erwärmt, mit Stickstoff unter einen Druck von 400 bar gesetzt und weiter behandelt, wie bei der ersten Infiltration beschrieben.

Anschließend wurden wieder die Meßwerte der Verbundkeramikkörper bestimmt (siehe Tabelle 2).

**II. Pyrolyse in Ammoniak**

Es wurde wie in I. gearbeitet, nur daß die Pyrolyse nach der ersten und zweiten Infiltration jeweils in $NH_3$ statt in $N_2$ vorgenommen wurde.

Dazu wurden die infiltrierten Formkörper innerhalb von 10 h bis auf 1300 °C unter einem $NH_3$-Druck von 1,2 bar erhitzt und 3 Stunden lang bei dieser Temperatur gehalten. Die auf Raumtemperatur abgekühlten Formkörper waren dann weiß-grau gefärbt.

Wieder wurden die Meßwerte der Verbundkeramikkörper nach der ersten und der zweiten Infiltration/Pyrolyse bestimmt (siehe Tabelle 2).

Eingesetzte Polychlorsilazane

Die eingesetzten "Polychlorsilazane 1 bis 12" wurden durch Reaktion eines Oligosilazans der Formel (I)

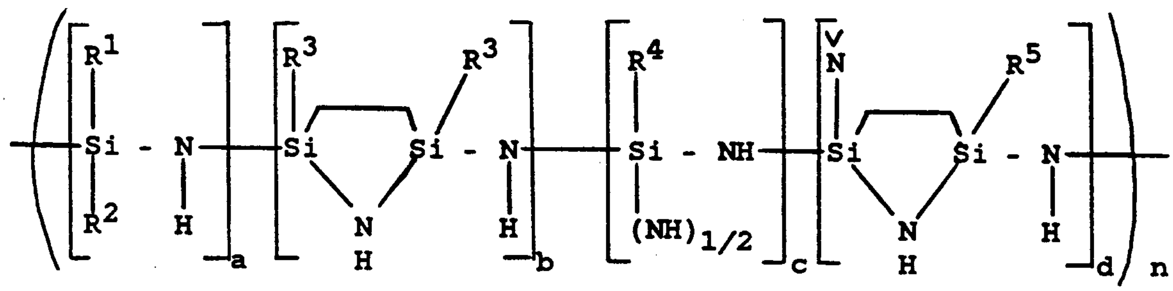

mit einem oder zwei Chlorsilanen durch Erhitzen auf 150 bis 250 °C hergestellt. Sie sind bei 20 °C glasartig spröde und schmelzen bei 70 bis 150 °C, so daß die porösen Formkörper leicht mit der Schmelze infiltriert werden können. Die folgende Tabelle 1 zeigt, aus welchen Oligosilazanen und Chlorsilanen die Polychlorsilazane 1-12 hergestellt wurden.

**Tabelle 1**

| Polychlor-silazan | Oligosilazan der Formel (I) | Chlorsilan (im molaren Verhältnis zum Oligosilazan) | |
|---|---|---|---|
| 1 | $R^1$=H, $R^2$=$CH_3$<br>a=1;b=c=d=0 | 0,7 | $(CH_3)HSiCl_2$ |
| 2 | $R^3$=$CH_3$<br>b=1; a=c=d=0 | 0,2 | $CH_3SiCl_3$ |
| 3 | $R^3$=$CH_3$<br>b=1; a=c=d=0 | 0,3 | $(CH_3)HSiCl_2$ |
| 4 | $R^1$=H, $R^2$=$CH_3$<br>a=1; b=c=d=0 | 0,6 | $(C_2H_3)SiCl_3$ |
| 5 | $R^1$=H, $R^2$=$CH_3$<br>a=1; b=c=d=0 | 0,35 | $Cl_2(CH_3)Si\text{-}CH_2CH_2\text{-}Si(CH_3)Cl_2$ |
| 6 | $R^1$=H, $R^2$=$R^3$=$CH_3$<br>a=0,67; b=0,33; c=d=0 | 0,55 | $CH_3SiCl_3$ |

**Fortsetzung Tabelle 1**

| Polychlor-silazan | Oligosilazan der Formel (I) | Chlorsilan (im molaren Verhältnis zum Oligosilazan) | |
|---|---|---|---|
| 7 | $R^1=H$, $R^2=R^3=CH_3$<br>a=0,75; b=0,25; c=d=0 | 0,25 | $Cl_2(CH_3)Si-CH_2CH_2-Si(CH_3)Cl_2$ |
| 8 | $R^1=H$, $R^2=R^3=CH_3$<br>a=0,4; b=0,6; c=d=0 | 0,1<br>0,2 | $(C_2H_3)SiCl_3$<br>$Cl_2(CH_3)Si-CH_2CH_2-Si(CH_3)Cl_2$ |
| 9 | $R^1=R^2=R^3=CH_3$<br>a=0,5; b=0,5; c=d=0 | 0,15<br>0,25 | $Cl_3Si-CH_2CH_2-Si(CH_3)Cl_2$<br>$(C_2H_5)SiCl_3$ |
| 10 | $R^1=H$, $R^2=R^3=R^4=CH_3$<br>a=0,42; b=0,2; c=0,38; d=0 | 0,35 | $CH_3SiCl_3$ |
| 11 | $R^1=R^2=R^3=R^4=R^5=CH_3$<br>a=b=c=d=0,25 | 0,33 | $Cl_3Si-CH_2CH_2-Si(CH_3)Cl_2$ |
| 12 | $R^1=H$, $R^2=R^3=CH_3$, $R^4=C_2H_3$<br>a=0,64; b=0,16; c=0,2; d=0 | 0,2 | $Cl_3Si-CH_2CH_2-Si(CH_3)Cl_2$ |

**Tabelle 2**

| Polychlorsilazan | Nach 1. Infiltration und Pyrolyse Dichte g/cm³ | Bbf | Offene Poros. | Gesamtporos. | Nach 2. Infiltration und Pyrolyse Dichte | Bbf | Offene Poros. | Gesamtporos. | Pyrolysegas |
|---|---|---|---|---|---|---|---|---|---|
| 1 | 2,85 | 395 | 3,2 | 9,5 | 2,88 | 450 | 1,0 | 8,5 | $N_2$ |
| | 2,80 | 370 | 4,1 | 11,9 | 2,89 | 450 | 0,8 | 9,1 | $NH_3$ |
| 2 | 2,88 | 405 | 3,0 | 8,5 | 2,93 | 475 | 0,4 | 7,0 | $N_2$ |
| | 2,82 | 380 | 3,5 | 11,3 | 2,90 | 470 | 0,4 | 8,8 | $NH_3$ |
| 3 | 2,89 | 410 | 2,0 | 8,3 | 2,95 | 495 | <0,1 | 6,4 | $N_2$ |
| | 2,81 | 385 | 3,3 | 11,6 | 2,91 | 480 | 0,5 | 8,5 | $NH_3$ |
| 4 | 2,61 | 360 | 7,3 | 17,1 | 2,80 | 420 | 0,8 | 11,1 | $N_2$ |
| | 2,59 | 315 | 8,8 | 18,6 | 2,61 | 340 | 2,9 | 17,9 | $NH_3$ |
| 5 | 2,86 | 410 | 2,8 | 9,2 | 2,96 | 490 | <0,1 | 6,0 | $N_2$ |
| | 2,82 | 400 | 3,1 | 11,3 | 2,94 | 495 | <0,1 | 7,6 | $NH_3$ |
| 6 | 2,90 | 410 | 1,9 | 7,9 | 2,93 | 510 | <0,1 | 7,0 | $N_2$ |
| | 2,82 | 405 | 2,2 | 11,3 | 2,94 | 500 | <0,1 | 7,6 | $NH_3$ |

Dabei bedeutet "Bbf" die 4-Punkt-Biegebruchfestigkeit (40/20) in MPa, "Offene Poros." die offene Porosität in % und "Gesamtporos." die Gesamtporosität in Prozent.

**Fortsetzung Tabelle 2**

| Poly-chlor-sila-zan | Nach 1. Infiltration und Pyrolyse | | | | Nach 2. Infiltration und Pyrolyse | | | | Pyro-lyse-gas |
|---|---|---|---|---|---|---|---|---|---|
| | Dichte g/cm³ | Bbf | Offene Poros. | Gesamt-poros. | Dichte | Bbf | Offene Poros. | Gesamt-poros. | |
| 7 | 2,87 | 415 | 1,8 | 8,9 | 2,89 | 475 | 0,6 | 8,3 | $N_2$ |
| | 2,80 | 400 | 2,2 | 11,9 | 2,84 | 455 | 0,7 | 10,7 | $NH_3$ |
| 8 | 2,81 | 365 | 3,1 | 8,6 | 2,88 | 440 | 1,1 | 8,6 | $N_2$ |
| | 2,79 | 340 | 3,9 | 12,2 | 2,83 | 430 | 1,9 | 11,0 | $NH_3$ |
| 9 | 2,60 | 330 | 8,1 | 17,5 | 2,79 | 415 | 2,1 | 11,4 | $N_2$ |
| 10 | 2,90 | 475 | 0,4 | 7,9 | 2,92 | 480 | <0,1 | 7,3 | $N_2$ |
| | 2,80 | 400 | 3,0 | 11,9 | 2,89 | 450 | 0,6 | 9,1 | $NH_3$ |
| 11 | 2,74 | 365 | 6,2 | 13,0 | 2,85 | 440 | 1,9 | 9,5 | $N_2$ |
| | 2,71 | 365 | 5,0 | 14,8 | 2,81 | 425 | 1,9 | 11,6 | $NH_3$ |
| 12 | 2,78 | 380 | 3,9 | 11,7 | 2,88 | 460 | 0,7 | 8,6 | $N_2$ |
| | 2,77 | 375 | 4,9 | 12,9 | 2,85 | 455 | 0,9 | 10,4 | $NH_3$ |

Dabei bedeutet "Bbf" die 4-Punkt-Biegebruchfestigkeit (40/20) in MPa, "Offene Poros." die offene Porosität in % und "Gesamtporos." die Gesamtporosität in Prozent.

**Patentansprüche**

**1.** Verfahren zur Herstellung einer hochfesten Verbundkeramik, dadurch gekennzeichnet, daß mm in einem ersten Schritt in eine offenporige Matrix ein schmelzflüssiges Polychlorsilazan infiltriert und in einem zweiten Schritt die infiltrierte Matrix unter Schutzgas auf 800 bis 2500 °C erhitzt, wobei das Polychlorsilazan dadurch erhältlich ist, daß man mindestens eines der Oligosilazane der Formel (I)

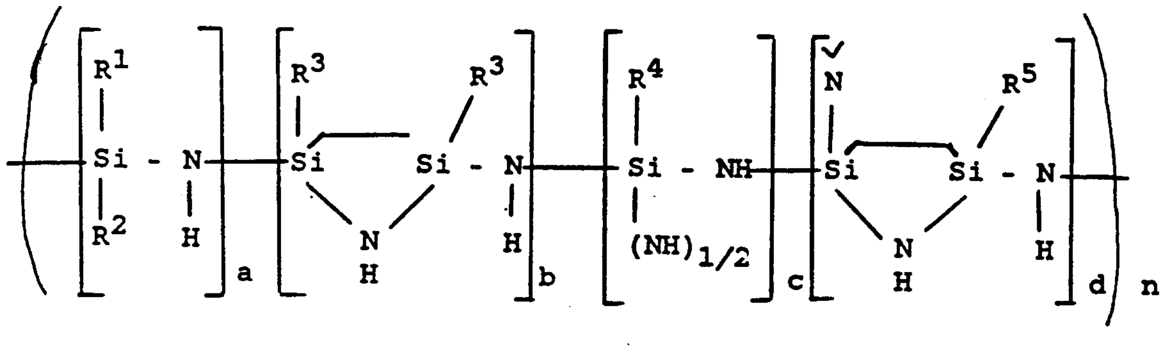

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist.

2. Verfahren nach Anspruch 1, dadurch gekennzeichnet, daß man als Schutzgas Stickstoff oder ein Edelgas oder eine Mischung aus diesen Gasen verwendet.

3. Verfahren nach Anspruch 1 oder 2, dadurch gekennzeichnet, daß man die infiltrierte Matrix auf 1000 bis 2000 °C erhitzt.

4. Verfahren zur Herstellung einer hochfesten Verbundkeramik, dadurch gekennzeichnet, daß man in einem ersten Schritt in eine offenporige Matrix ein schmelzflüssiges Polychlorsilazan infiltriert und in einem zweiten Schritt die infiltrierte Matrix unter Ammoniak oder ammoniakhaltigem Gas auf 800 bis 1500 °C erhitzt, wobei das Polychlorsilazan dadurch erhältlich ist, daß man mindestens eines der Oligosilazane der Formel (I)

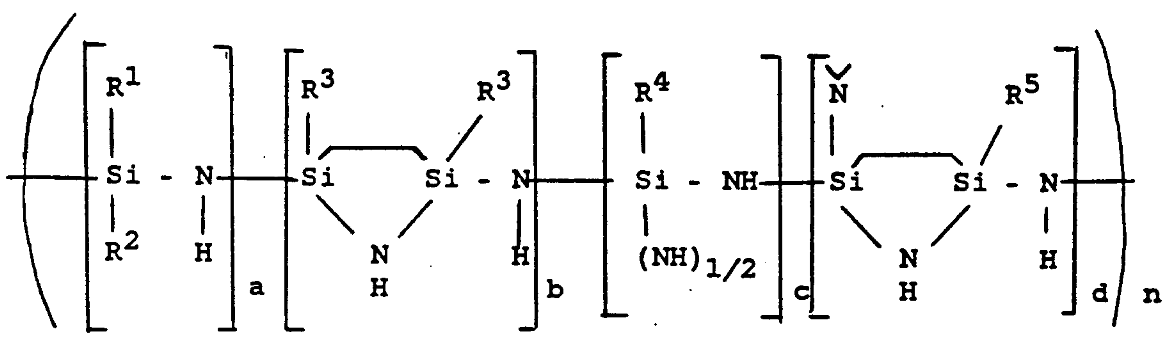

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist.

5. Verfahren nach einem der Ansprüche 1 bis 4, dadurch gekennzeichnet, daß man als offenporige Matrix einen Formkörper aus Oxid, Nitrid, Oxinitrid, Carbid, Silizid, Silikat, Phosphid und/oder Borid verwendet.

6. Verfahren nach einem der Ansprüche 1 bis 5, dadurch gekennzeichnet, daß man als offenporige Matrix einen gesinterten Formkörper aus reaktionsgebundenem Siliziumnitrid (RBSN) verwendet.

7. Verfahren zur Herstellung einer hochfesten Siliziumnitrid-Verbundkeramik (RBSN) mit einem Kohlenstoffgehalt von unter 0,5 Gew.-%, einem Sauerstoffgehalt von unter 4 Gew.-% und einer offenen

Porosität von weniger als 3 %, dadurch gekennzeichnet, daß man in einem ersten Schritt in eine gesinterte reaktionsgebundene Siliziumnitrid-Matrix (RBSN) mit einer offenen Porosität von 15 bis 30 % ein schmelzfüssiges Polychlorsilazan infiltriert und in einem zweiten Schritt die infiltrierte Matrix unter Ammoniak oder ammoniakhaltigem Gas auf 800 bis 1500 °C erhitzt, wobei das Polychlorsilazan dadurch erhältlich ist, daß man mindestens eines der Oligosilazane der Formel (I)

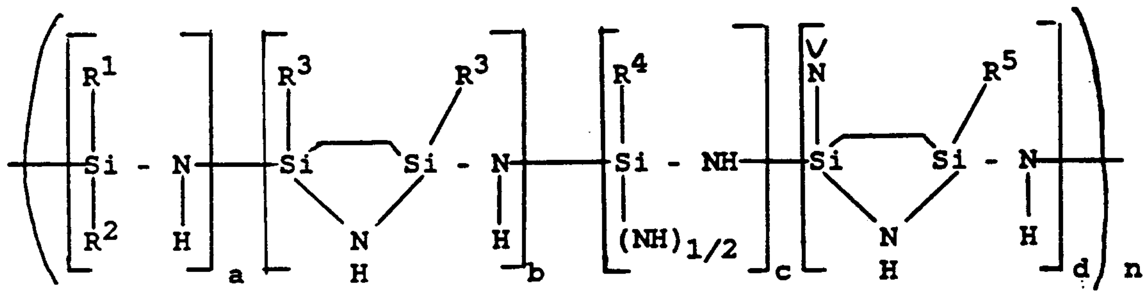

worin a, b, c, d die Molfraktionen der jeweiligen Struktureinheiten bedeuten und wobei $0 \leq a \leq 1$, $0 \leq b \leq 1$, $0 \leq c < 0.7$, $0 \leq d < 0.7$, $0.3 \leq a+b$, $c+d < 0.7$ und n etwa 2 bis etwa 12 ist, mit mindestens einem der Chlorsilane $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ bei 30 bis 300 °C umsetzt, wobei unabhängig voneinander $R^1$, $R^2$, $R^4$, $R^6$, $R^7$, $R^8$ = H, $C_1$-$C_6$-Alkyl oder $C_2$-$C_6$-Alkenyl und $R^3$, $R^5$, $R^9$, $R^{10}$ = $C_1$-$C_6$-Alkyl oder $C_2$-$C_6$-Alkenyl ist.

**8.** Verfahren nach einem der Ansprüche 1 bis 7, dadurch gekennzeichnet, daß man in dem schmelzflüssigen Polychlorsilazan vor der Infiltration ein Sinterhilfsmittel löst.

**9.** Verfahren nach Anspruch 8, dadurch gekennzeichnet, daß man als Sinterhilfsmittel Verbindungen von Magnesium, Aluminium, Yttrium oder einem seltenen Erdmetall einzeln oder als Gemisch einsetzt.

**10.** Verfahren nach Anspruch 9, dadurch gekennzeichnet, daß man als Verbindungen der genannten Metalle die Nitrate, Alkoholate, Acetate oder Acetylacetonate einzeln oder als Gemisch einsetzt.

**11.** Verfahren nach einem der Ansprüche 1 bis 10, dadurch gekennzeichnet, daß man die Sequenz aus Infiltration und Erhitzung an derselben Matrix ein oder mehrmals wiederholt.

**12.** Verfahren nach einem der Ansprüche 1 bis 11, dadurch gekennzeichnet, daß man die hergestellte hochfeste Verbundkeramik durch einen anschließenden Heiß-Preßsinter-Schritt weiter verdichtet.

**13.** Hochfeste reaktionsgebundene Siliziumnitrid-Verbundkeramik, bestehend aus kristallinem $\alpha$- und $\beta$-$Si_3N_4$ und 1 bis 10 Gew.-% eingelagertem amorphem $Si_3N_4$ mit einem Kohlenstoffgehalt von unter 0,5 Gew.-%, einem Sauerstoffgehalt von unter 4 Gew.-% und einer offenen Porosität von weniger als 3 %.

**14.** Verwendung der hochfesten Verbundkeramik gemäß Anspruch 13 als Bauteil für hohe thermische, mechanische oder korrosive Beanspruchung.

## Claims

**1.** A process for producing a high-strength composite ceramic, which comprises infiltrating a molten polychlorosilazane into an open-pored matrix in a first step and heating the infiltrated matrix under a blanketing gas to 800 to 2500 °C in a second step, the polychlorosilazane being obtainable by reacting at least one of the oligosilazanes of the formula (I)

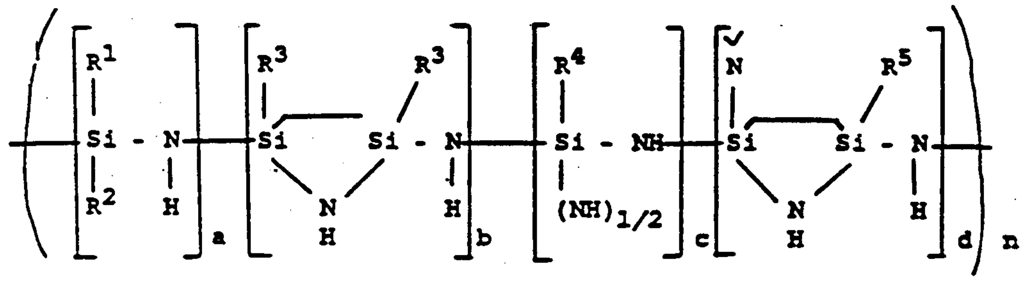

in which a, b, c and d are the mol fractions of the respective structural units with $0 \leqq a \leqq 1$, $0 \leqq b \leqq 1$, $0 \leqq c < 0.7$, $0 \leqq d < 0.7$, $0.3 \leqq a+b$, $c+d < 0.7$ and n is about 2 to about 12, with at least one of the chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ at 30 to 300 °C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl.

2. The process as claimed in claim 1, wherein nitrogen or a rare gas or a mixture of these gases is used as the blanketing gas.

3. The process as claimed in claim 1 or 2, wherein the infiltrated matrix is heated to 1000 to 2000 °C.

4. A process for producing a high-strength composite ceramic, which comprises infiltrating a molten polychlorosilazane into an open-pored matrix in a first step and heating the infiltrated matrix under ammonia or an ammonia-containing gas to 800 to 1500 °C in a second step, the polychlorosilazane being obtainable by reacting at least one of the oligosilazanes of the formula (I)

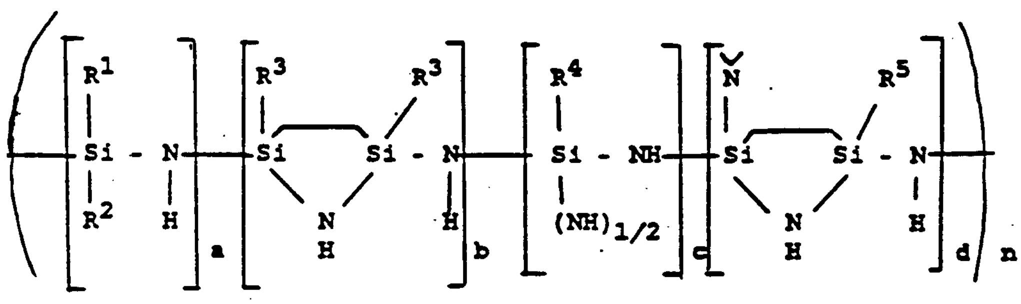

in which a, b, c and d are the mol fractions of the respective structural units with $0 \leqq a \leqq 1$, $0 \leqq b \leqq 1$, $0 \leqq c < 0.7$, $0 \leqq d < 0.7$, $0.3 \leqq a+b$, $c+d < 0.7$ and n is about 2 to about 12, with at least one of the chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ at 30 to 300 °C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl.

5. The process as claimed in any of claims 1 to 4, wherein a molding of an oxide, nitride, oxynitride, carbide, silicide, silicate, phosphide and/or boride is used as the open-pored matrix.

6. The process as claimed in any of claims 1 to 5, wherein a sintered molding of reaction-bonded silicon nitride (RBSN) is used as the open-pored matrix.

7. A process for producing high-strength silicon nitride composite ceramics (RBSN) having a carbon content of less than 0.5% by weight, an oxygen content of less than 4% by weight and an open porosity of less than 3%, which comprises infiltrating a molten polychlorosilazane into a sintered reaction-bonded silicon nitride matrix (RBSN) having an open porosity of 15 to 30% in a first step and heating the infiltrated matrix under ammonia or an ammonia-containing gas to 800 to 1500 °C in a second step, the polychlorosilazane being obtainable by reacting at least one of the oligosilazanes of

the formula (I)

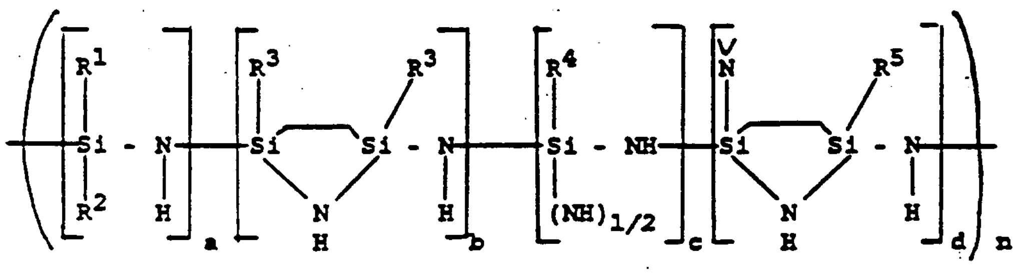

in which a, b, c and d are the mol fractions of the respective structural units with $0 \leqq a \leqq 1$, $0 \leqq b \leqq 1$, $0 \leqq c < 0.7$, $0 \leqq d < 0.7$, $0.3 \leqq a+b$, $c+d < 0.7$ and n is about 2 to about 12, with at least one of the chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ at 30 to 300 °C, where, independently of one another, $R^1$, $R^2$, $R^4$, $R^6$, $R^7$ and $R^8$ are H, $C_1$-$C_6$-alkyl or $C_2$-$C_6$-alkenyl and $R^3$, $R^5$, $R^9$ and $R^{10}$ are $C_1$-$C_6$-alkyl or $C_2$-$C_6$-alkenyl.

**8.** The process as claimed in any of claims 1 to 7, wherein a sintering auxiliary is dissolved in the molten polychlorosilazane before the infiltration.

**9.** The process as claimed in claim 8, wherein compounds of magnesium, aluminum, yttrium or a rare earth metal individually or as a mixture are used as the sintering aid.

**10.** The process as claimed in claim 9, wherein the nitrates, alcoholates, acetates or acetylacetonates individually or as a mixture are used as the compounds of the said metals.

**11.** The process as claimed in any of claims 1 to 10, wherein the sequence of infiltration and heating is repeated once or several times on the same matrix.

**12.** The process as claimed in any of claims 1 to 11, wherein the high-strength composite ceramics produced are further compacted by a subsequent hot press-sintering step.

**13.** High-strength reaction-bonded silicon nitride composite ceramics, composed of crystalline $\alpha$- and $\beta$-$Si_3N_4$ and 1 to 10% by weight of incorporated amorphous $Si_3N_4$ having a carbon content of less than 0.5% by weight, an oxygen content of less than 4% by weight and an open porosity of less than 3%.

**14.** The use of the high-strength composite ceramics as claimed in claim 13 as a component for high thermal, mechanical or corrosive stresses.

## Revendications

**1.** Procédé pour la préparation d'une céramique composite réfractaire, caractérisé en ce que dans une première étape on infiltre une matrice à pores ouverts d'un polychlorosilazane liquide par fusion et dans une deuxième étape on chauffe la matrice infiltrée sous une atmosphère de gaz protecteur à 800 à 2 500 °C, en obtenant le polychlorosilazane en faisant réagir au moins un des oligosilazanes de formule (I) :

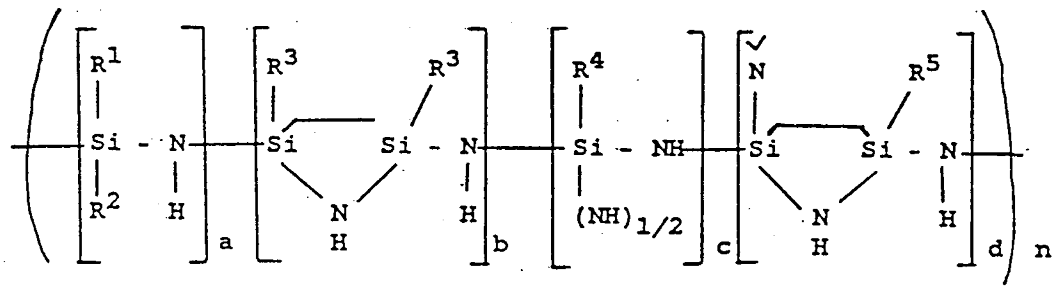

où a, b, c, d représentent les fractions molaires des unités de structures respectives et où 0≦a≦1, 0≦b≦1, 0≦c<0,7, 0≦d<0,7, 0,3≦a+b, c+d<0,7 et n étant d'environ 2 à environ 12, avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ à 30 à 300 °C, où indépendamment l'un de l'autre, $R^1$, $R^2$, $R^4$, $R^6$, $R^7$, $R^8$ = H, alkyle en $C_1$-$C_6$ ou alcényle en $C_2$-$C_6$, et $R^3$, $R^5$, $R^9$, $R^{10}$ = alkyle en $C_1$-$C_6$ ou alcényle en $C_2$-$C_6$.

2. Procédé selon la revendication 1, caractérisé en ce qu'on utilise en tant que gaz protecteur l'azote ou un gaz noble ou un mélange de ces gaz.

3. Procédé selon la revendication 1 ou 2, caractérisé en ce qu'on chauffe la matrice infiltrée à une température de 1 000 a 2 000 °C.

4. Procédé pour la préparation d'une céramique composite réfractaire, caractérisé en ce que dans une première étape on infiltre une matrice à pores ouverts d'un polychlorosilazane liquide par fusion et dans une deuxième étape on chauffe la matrice infiltrée sous une atmosphère d'ammoniac ou de gaz contenant l'ammoniac à une température de 800 à 1 500 °C, en obtenant le polychlorosilazane en faisant réagir au moins un des oligosilazanes de formule (I) :

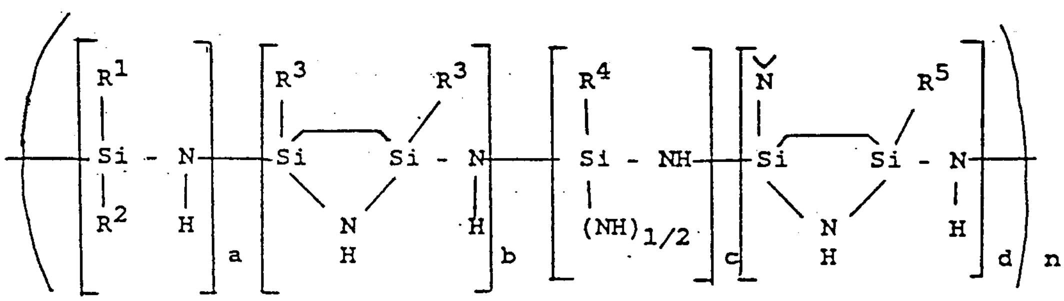

où a, b, c, d représentent les fractions molaires des unités de structures respectives et où 0≦a≦1, 0≦b≦1, 0≦c<0,7, 0≦d<0,7, 0,3≦a+b, c+d<0,7 et n étant d'environ 2 à environ 12, avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ à 30 à 300 °C, ou indépendamment l'un de l'autre, $R^1$, $R^2$, $R^4$, $R^6$, $R^7$, $R^8$ = H, alkyle en $C_1$-$C_6$ ou alcényle en $C_2$-$C_6$ et $R^3$, $R^5$, $R^9$, $R^{10}$ = alkyle en $C_1$-$C_6$ ou alcényle en $C_2$-$C_6$.

5. Procédé selon l'une des revendications 1 à 4, caractérisé en ce qu'on utilise en tant que matrice à pores ouverts un objet moulé en oxyde, en nitrure, en oxynitrure, en carbure, en siliciure, en silicate, en phosphure et/ou en borure.

6. Procédé selon l'une des revendications 1 à 5, caractérisé en ce qu'on utilise en tant que matrice à pores ouverts un objet moulé fritté en nitrure de silicium lié par réaction (CNSLR).

7. Procédé pour la préparation d'une céramique composite au nitrure de silicium réfractaire (CNSLR) ayant une teneur en carbone inférieure à 0,5 % en poids, une teneur en oxygène inférieure à 4 % en poids et une porosité ouverte inférieure à 3 %, caractérisé en ce que dans une première étape on infiltre une matrice de nitrure de silicium liée par réaction, ayant une porosité ouverte de 15 à 30 %,

d'un polychlorosilazane liquide par fusion et dans inne deuxième étape on chauffe la matrice infiltrée sous inne atmosphère d'ammoniac ou d'un gaz contenant l'ammoniac à une température de 800 à 1 500 °C, en obtenant le polychlorosilazane en faisant réagir au moins un des oligosilazanes de formule (I) :

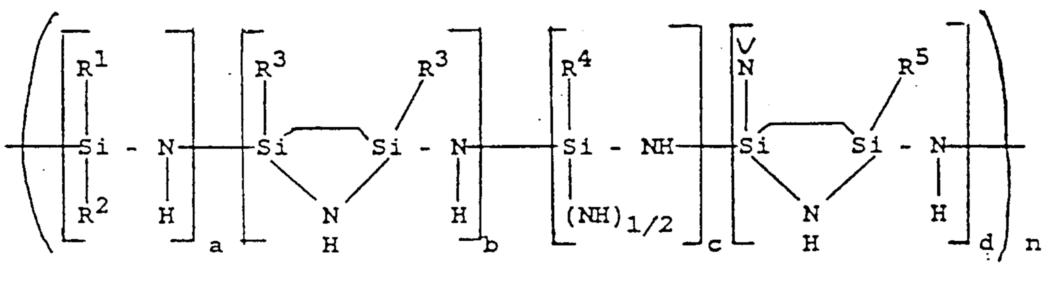

où a, b, c, d représentent les fractions molaires des unités de structure respectives et où $0 \leq a \leq 1$, $0 \leq b \leq 1$, $0 \leq c < 0,7$, $0 \leq d < 0,7$, $0,3 \leq a+b$, $c+d < 0,7$, et n étant d'environ 2 à environ 12, avec au moins un des chlorosilanes $R^6R^7SiCl_2$, $R^8SiCl_3$, $Cl_2R^9Si\text{-}CH_2CH_2\text{-}SiR^9Cl_2$, $Cl_3Si\text{-}CH_2CH_2\text{-}SiR^{10}Cl_2$ à 30 à 300 °C, où indépendamment l'un de l'autre, $R^1$, $R^2$, $R^4$, $R^6$, $R^7$, $R^8$ = H, alkyle en $C_1$-$C_6$ ou alcényle en $C_2$-$C_6$ et $R^3$, $R^5$, $R^9$, $R^{10}$ = alkyle en $C_1$-$C_6$ ou alcényle en $C_2$-$C_6$.

**8.** Procédé selon l'une des revendications 1 à 7, caractérisé en ce qu'on dissout dans le polychlorosilazane liquide par fusion avant l'infiltration un adjuvant de frittage.

**9.** Procédé selon la revendication 8, caractérisé en ce qu'on utilise en tant qu'adjuvants de frittage des composés de magnésium, d'aluminium, d'yttrium et d'un métal de terres rares, seuls ou sous forme de mélange.

**10.** Procédé selon la revendication 9, caractérisé en ce qu'on utilise en tant que composés des métaux cités les nitrures, les alcoolates, les acétates ou les acétylacétonates seuls ou sous forme de mélange.

**11.** Procédé selon l'une des revendications 1 à 10, caractérisé en ce qu'on répète la séquence d'infiltration et de chauffage pour la même matrice une ou plusieurs fois.

**12.** Procédé selon l'une des revendications 1 à 11, caractérisé en ce qu'on augmente davantage la densité de la céramique réfractaire préparée par une étape ultérieure de frittage sous pression à chaud.

**13.** Céramique réfractaire au nitrure de silicium lié par réaction, composée d'$\alpha$- et de $\beta$-$Si_3N_4$ et de 1 à 10 % en poids de $Si_3N_4$ amorphe additionné ayant une teneur en carbone inférieure à 0,5 % en poids, une teneur en oxygène inférieure à 4 % en poids et une porosité ouverte inférieure à 3 %.

**14.** Utilisation de la céramique composite réfractaire selon la revendication 13 en tant qu'élément pour des sollicitations élevées thermiques, mécaniques ou corrosives.